# EUROPÄISCHE PATENTSCHRIFT

(11) **EP 3 990 993 B1**
(45) Veröffentlichungstag und Bekanntmachung des Hinweises auf die Patenterteilung: **31.07.2024**
(21) Anmeldenummer: 20743058.8
(22) Anmeldetag: 22.06.2020
(51) Int. Cl.: G05B 19/418

(54) **VORRICHTUNG UND VERFAHREN ZUR PROZESSZEITOPTIMIERUNG EINER PRODUKTIONSMASCHINE**
DEVICE AND METHOD FOR OPTIMISING THE PROCESS TIME OF A PRODUCTION MACHINE
DISPOSITIF ET PROCÉDÉ D'OPTIMISATION DE TEMPS DE TRAITEMENT D'UNE MACHINE DE PRODUCTION

(30) Priorität: 25.06.2019 DE 102019117097
(43) Veröffentlichungstag der Anmeldung: 04.05.2022
(73) Patentinhaber: KIEFEL GmbH, 83395 Freilassing (DE)
(72) Erfinder: LANG, Christian, 5120 Haigermoos (AT); SCHÖRGHOFER, Michael, 5422 Bad Dürrnberg (AT); KNOLL, Peter, 83404 Ainring (DE); AINZ, Andreas, 5325 Plainfeld (AT); HRADETZ, Horst, 83404 Ainring/Mitterfelden (DE)
(74) Vertreter: DTS Patent- und Rechtsanwälte PartmbB
(86) Internationale Anmeldenummer: PCT/DE2020/000136
(87) Internationale Veröffentlichungsnummer: WO 2020/259728

(56) Entgegenhaltungen:
- EP-A1- 3 038 442
- EP-A1- 3 383 159
- WO-A1-2018/146772

## Beschreibung

### Gebiet der Erfindung

Die Erfindung betrifft eine Produktionsmaschine mit einem Steuerungsprogramm zur Visualisierung von Stationen und/oder Maschinenkomponenten unter Hervorhebung der geschwindigkeitsbestimmenden Station und/oder der geschwindigkeitsbestimmenden Maschinenkomponente zur Optimierung der Prozesszeit. Die Erfindung betrifft zudem einem Verfahren zum Optimieren der Prozesszeit für eine Produktionsmaschine mit einem solchen Steuerungsprogramm sowie einem Datenträger mit einem solchen Steuerungsprogramm.

### Hintergrund der Erfindung

Produktionsmaschinen mit mehreren Stationen werden in vielen Bereichen der Fertigung eingesetzt. Diese Stationen bestehen in der Regel aus mehreren Baugruppen unter Verwendung produktspezifischer Werkzeuge. In der Kunststoffverarbeitung werden beispielweise als primär formerzeugende Stationen Blasformstationen oder Thermoformstationen verwendet. Weitere Stationen im Rahmen einer Produktionsmaschine können eine Stanze, eine Lochstanze oder eine Stapelung sein. Der eigentliche Produktionsprozess wird durch Prozessparameter definiert, die als maschinenübergreifende Parameter die Zusammenarbeit der unterschiedlichen Stationen steuern oder innerhalb einer Station die Arbeitsprozesse der einzelnen Bauteile und Werkzeuge. Diese Prozessparameter definieren in ihrer Gesamtheit den (üblicherweise zyklischen) Prozessablauf und bilden so ein Produktionsprogramm, das auch als Rezept bezeichnet wird.

Im Stand der Technik sind Verfahren und Vorrichtungen zur Visualisierung des Produktionsprogramms als Ablaufdiagramm bekannt. Hierbei wird der Prozessablauf schematische unter Angabe der beteiligten Stationen bzw. Baugruppen/Werkzeuge angezeigt, wobei die einzelnen, den Komponenten oder Werkzeugen zugeordneten Prozessschritte als Balken gegenüber der Zeit aufgetragen sind.

Das Produktionsprogramm soll einerseits die Herstellung eines qualitativ hochwertigen Produkts in reproduzierbarer Weise erlauben, andererseits auch die Produktionszeit minimieren.

Aus der WO 2018 / 146772 A1 ist eine Vorrichtung und ein Verfahren zum Optimieren der Prozesszeit für eine Produktionsmaschine bekannt, wobei eine Maschinensteuerung umfasst ist und weiterhin ein berührungsempfindlichen Bildschirm als Visualisierungseinrichtung und interaktive Benutzerschnittstelle vorgesehen ist. Vorgeschlagen werden die Durchführung von Iterationen bis zur Erreichung einer maximal verkürzten Prozesszeit, die über den Bildschirm visualisiert werden.

Bei komplex aufgebauten Produktionsprogrammen mit vielen Bauteilen/Werkzeugen und evtl. mehreren Stationen ist es für den Bediener äußerst schwierig die geschwindigkeitsbestimmenden Prozessabläufe zu identifizieren, zumal einzelnen Prozessschritte mit den beteiligten Baugruppen/Werkzeugen nicht nur konsekutiv ablaufen, sondern zum Teil auch parallel oder in überlappender Weise. Hinzu kommt, dass neben der eigentlichen Wirkzeit auch weitere Prozesszeiten wie Verzögerungszeit, Fahrzeit oder Vorhaltezeit als parametrisierende Zeitphasen vorliegen. Zudem sind üblicherweise Freigaben definiert, um kritische Prozessschnittstellen zu berücksichtigen.

Der Fachmann hat daher trotz schematischer Visualisierung mittels Ablaufdiagramm keine objektive Basis für eine Zeitoptimierung des Prozessprogramms und damit des Herstellungsprozesses. Er muss hier auf seine individuelle Erfahrung zurückgreifen und in einem "Trial-and-error"-Ansatz, der üblicherweise auch eine Inbetriebnahme der Produktionsmaschine erfordert, versuchen, den Prozess hinsichtlich der Prozesszeit zu optimieren.

Es wäre daher wünschenswert, die zeitliche Optimierung des Prozessablaufs auf eine objektivere Basis zu stellen und eine Prozessvisualisierung dem Benutzer zur Verfügung zu stellen, mit der er unabhängig von seiner Erfahrung schneller zu einem für die Produktion zeitlich verbesserten Prozessparametersatz gelangen kann.

### Zusammenfassung der Erfindung

Der Erfindung liegt die Aufgabe zugrunde, ein Steuerungsprogramm für Produktionsmaschinen zur Verfügung zu stellen, mit denen die zeitliche Optimierung des Prozessparametersatzes auf einer objektiveren Basis erfolgt und eine Prozessvisualisierung dem Benutzer zur Verfügung gestellt wird, mit der er unabhängig von seiner Erfahrung zielgerichtet und damit schneller zu einem für die Produktion zeitlich verbesserten Prozessparametersatz gelangen kann. ∥

Die Aufgabe der Erfindung wird gelöst durch eine Produktionsmaschine gemäß Anspruch 1 und ein Verfahren gemäß Anspruch 9. Weitere vorteilhafte Ausgestaltungen der Produktionsmaschine sind Gegenstand der abhängigen Ansprüche 2 bis 8. Weitere vorteilhafte Ausgestaltungen des Verfahrens sind Gegenstand der abhängigen Ansprüche 10 bis 16.

In einem ersten Aspekt betrifft die Erfindung eine Produktionsmaschine, umfassend mehrere Stationen (2), die jeweils mehrere Maschinenkomponenten (3) umfassen, und eine Maschinensteuerung (4) zur Steuerung der Produktionsmaschine (1) umfassend ein Steuerungsprogramm (5) mit einer Visualisierungseinrichtung (6), wobei das Steuerungsprogramm (5) dazu ausgestaltet ist, auf der Visualisierungseinrichtung (6) die Stationen und/oder die Maschinenkomponenten einer Station als Ablaufdiagramm anzuzeigen und dabei die geschwindigkeitsbestimmende Station und/oder die geschwindigkeitsbestimmende Maschinenkomponente hervorzuheben.

Produktionsmaschinen für die Kunststoffverarbeitung sind beispielsweise Blasformmaschinen oder Thermoformmaschinen. Blasformmaschinen stellen einen Folienschlauch aus erwärmtem Kunststoffmaterial her. Thermoformmaschinen werden zur Produktion von tiefgezogenen Formteilen umfassend eine Transporteinrichtung für eine thermoplastische Folienbahn und eine Formstation zum Formen der Formteile aus der zuvor erwärmten Folienbahn verwendet. Solche Maschinen zeichnen sich dadurch aus, dass sie eine Vielzahl an einzelnen Maschinenkomponenten umfassen, die geeignet zusammenwirken müssen, da ein einziger Folienschlauch bzw. eine einzige Folienbahn durch die gesamte Produktionsanlage hindurchgeführt wird und somit die Maschinenkomponenten für einen guten Gesamtprozess in ihrer Wirkung und Taktzeit aufeinander abgestimmt werden müssen. Maschinenkomponenten für eine Thermoformmaschine umfassen beispielsweise die Transportvorrichtung für Folienversorgung von einer Folienrolle, eine Vorheizstation zum Vorheizen der Folienbahn, eine Heizstation zum Heizen der Folienbahn auf Prozesstemperatur, eine Formstation zum Formen des Produktes aus der Folienbahn, eine Schneidestation zur Herausschneiden der geformten Produkte aus der Folienbahn, eine Stapelstation zur Stapelung der fertigen Produkte und eine Verwertungsstation für die nicht verarbeitete Folienbahn.

Die Maschinensteuerung kann dabei an der Produktionsmaschine oder separat von der Produktionsmaschine angeordnet sein, wobei die Maschinensteuerung über geeignete Datenleitungen mit den jeweiligen Maschinenkomponenten so verbunden ist, dass die Eingaben der Prozessparameter in entsprechende Maschineneinstellungen umgesetzt werden können. Die Maschinesteuerung umfasst außerdem einen Prozessor, auf dem das Steuerungsprogramm installiert und ausgeführt werden kann sowie einen Datenspeicher zur Speicherung von Prozessparameter oder ist zumindest mit einem solchen Speicher verbunden. Die Datenleitungen können dabei als Datenkabel oder drahtlos ausgeführt sein. Die Maschinesteuerung kann beispielsweise auch als Cloudlösung implementiert sein, die über ein WLAN oder eine Internetverbindung mit der Produktionsmaschine verbunden ist.

Stationen im Sinne der Erfindung sind funktionell zusammenhängende Einzelmaschinen der Gesamtmaschinen. Beispiele hier sind eine Stapelmaschine oder eine Stanze. Die Bestandteile dieser Stationen werden als Maschinenkomponenten bezeichnet. Beispielsweise umfasst bei einer Thermoformmaschine als Produktionsmaschine die Station "Formstation" als Maschinenkomponenten ein Oberwerkzeug und ein Unterwerkzeug, zwischen denen die Folienbahn für den Formprozess eingespannt wird und gegebenenfalls Vordehnstempel, die die Folie beim Formprozess vordehnen.

Gemäß der Erfindung erfolgt bei der der Produktionsmaschine die Hervorhebung der geschwindigkeitsbestimmenden Station und/oder die geschwindigkeitsbestimmende Maschinenkomponente durch eine oder beide der im Folgenden aufgelisteten Visualisierungsformen:
Visualisierungsform 1: Bei dieser Visualisierungsform wird im Ablaufdiagramm eine bezüglich senkrecht zur t-Achse des Ablaufdiagramms verlaufende Linie angezeigt, die den Balken der geschwindigkeitsbestimmenden Station oder der geschwindigkeitsbestimmenden Maschinenkomponente in dem t-Wert schneidet, bei dem der Prozessbalken dieser Station oder dieser Maschinenkomponente im Ablaufdiagramm endet. Dies hat den Vorteil, dass der Benutzer auf den ersten Blick die zeitliche Einbettung der geschwindigkeitsbestimmenden Station/Maschinenkomponente in den Gesamtprozess erfasst und damit leichter Maßnahmen zur Prozessoptimierung ergreifen kann,
Visualisierungsform 2: Bei dieser Visualisierungsform erfolgt die visuelle Hervorhebung von bereits im Ablaufdiagramm vorhandenen Verknüpfungen, wie einem Zeiger, der das Ende eines ersten geschwindigkeitsbestimmenden Prozessschrittes mit dem Beginn eines zweiten Prozessschritts verknüpft und eine Freigabe definiert. Damit ist für den Benutzer auch die prozedurale Einbettung in den Gesamtprozess sofort ersichtlich.

In einer weiteren Ausführungsform der Erfindung erfolgt bei der der Produktionsmaschine die Hervorhebung der geschwindigkeitsbestimmenden Station und/oder die geschwindigkeitsbestimmende Maschinenkomponente durch eine oder mehrere der im Folgenden aufgelisteten Visualisierungsformen 3 bis 5:
Visualisierungsform 3: Bei dieser Visualisierungsform erfolgt eine numerische Angabe der Verzögerungszeit. Dadurch hat der Benutzer sofort einen Hinweis auf die maximal einsparbare Zeit, die er hier durch Prozessanpassung erreichen kann.
Visualisierungsform 4: Bei dieser Visualisierungsform erfolgt eine Wiedergabe des Namens der geschwindigkeitsbestimmenden Station oder des geschwindigkeitsbestimmenden Schritts in einer Signalfarbe wie Gelb, Orange oder Rot. Dies erlaubt nicht nur eine sofortige Identifizierung der betreffenden geschwindigkeitsbestimmenden Station oder Maschinenkomponente, sondern verringert auch die Chance einer Fehlinterpretation mit anschließender Fehlbedienung.
Visualisierungsform 5: Bei dieser Visualisierungsform erfolgt die Verknüpfung der geschwindigkeitsbestimmenden Station oder des geschwindigkeitsbestimmenden Schrittes mit einem grafischen Symbol, wie beispielsweise einem Zifferblatt mit Zeigern. Derartige Symbole haben den Vorteil, dass sie eine intuitive Erfassung des Sachverhalts leisten und auch international verwendbar sind.

In einer weiteren Ausführungsform ist bei der erfindungsgemäßen Produktionsmaschine das Steuerungsprogramm zusätzlich dazu ausgestaltet, auf der Visualisierungseinrichtung die Zeitphasen der von der Maschinenkomponente durchgeführten Prozessabläufe anzuzeigen. Im Rahmen der vorliegenden Anmeldung ist eine Zeitphase als ein Zeitabschnitt definiert, in dem ein bestimmter Prozess von einer Maschinenkomponente oder Station durchgeführt wird. Er besitzt somit einen definierten Beginn und ein definiertes Ende, die damit eine Phasenlänge definieren.

Die Visualisierung der Zeitphasen geschieht bevorzugt durch eine zeilenweise Anordnung der Maschinenkomponenten mit der Zeitachse als horizontale Achse und einer Darstellung der Zeitphasen als visuell unterscheidbare Abschnitte eines Zeitstrahls in der Zeile der jeweiligen Maschinenkomponente. Eine solche Darstellung der Zeitphasen als Abschnitte eines Zeitstrahls erfolgt zweckmäßigerweise als Balkendiagramm.

Zweckmäßigerweise werden die Zeitphasen gemäß dem zugeordneten Prozessschritt einem bestimmten Zeitphasentyp zugeordnet. Nichteinschränkende Beispiele für derartige Zeitphasentypen sind Wirkzeit, Verzögerungszeit, Fahrzeit und Vorhaltezeit. So beschreibt beispielsweise die Wirkzeit diejenige Zeitphase, in der eine Maschinenkomponente auf das zu bearbeitende Werkstück einwirkt, wohingegen die Fahrzeit diejenige Zeit charakterisiert, bei der die Maschinenkomponente auf das Werkstück zugefahren oder von diesem weggefahren wird.

Erfindungsgemäß ist bei der Produktionsmaschine die Visualisierungseinrichtung als interaktive Benutzerschnittstelle eingerichtet. Bevorzugt ist hierbei eine Ausbildung als berührungsempfindlicher Bildschirm.

In einer Ausführungsform der Erfindung ist bei der Produktionsmaschine das Steuerungsprogramm zusätzlich dazu ausgestaltet, auf der Visualisierungseinrichtung eine Benutzerhilfe bereitzustellen, die bevorzugt durch Berühren/Anklicken der visuellen Hervorhebungen der geschwindigkeitsbestimmenden Station oder der geschwindigkeitsbestimmenden Maschinenkomponente geöffnet werden kann. Besonders bevorzugt ist hierbei, dass die Benutzerhilfe Vorschläge zur Zeitoptimierung des Prozesses beinhaltet. Bevorzugt ist hier eine Ausgestaltung als separates Programmfenster, das sich durch das benutzerseitige Aufrufen innerhalb des vorhandenen Programmfensters öffnet (sog. Popup-Menü).

In einer besonderen Ausführungsform ist bei der Produktionsmaschine (1) das Steuerungsprogramm (5) zusätzlich dazu ausgestaltet, auf der Visualisierungseinrichtung (6) Schaltfelder (13) zur Eingabe von Zeitwerten für die Zeitphasen der von der Maschinenkomponente durchgeführten Prozessabläufe anzuzeigen. Gemäß der Erfindung ist ein Schaltfeld als ein Eingabebereich einer Benutzeroberfläche definiert, in den ein oder mehrere Zeitwerte eingegeben werden können.

In bevorzugter Weise ist für das Schaltfeld eine oder mehrere der folgenden Visualisierungsformen vorgesehen:
- Die Schaltfelder werden in einem separaten Fenster dargestellt, das als Kontextmenü damit die umfassende Eingabe von Zeitwerten für die ausgewählte Station oder Maschinenkomponente erlaubt.
- Die Schaltfelder einer Maschinenkomponente sind in der entsprechenden Zeile der Maschinenkomponente angeordnet. Dies erlaubt die intuitive Zuordnung und einfache Werteeingabe.
- Die Abfolge der Schaltfelder innerhalb einer Zeile entspricht der Abfolge der dadurch steuerbaren Zeitphasen der Maschinenkomponente. Auch dies erlaubt eine intuitive und fehlerfreie Benutzung.
- Die Schaltfelder sind spaltenweise nach Zeitphasentyp gruppiert und damit besonders übersichtlich angeordnet.
- Die Schaltfelder sind mit denselben Farben wie die Zeitphasentypen des Ablaufdiagramms dargestellt.
- Die Schaltfelder sind jeweils mit einer Angabe zur jeweils vorliegenden Zeiteinheit wie Sekunden, Minuten oder Stunden versehen oder verknüpft, so dass der Benutzer auf den ersten Blick über die hier vorliegende Zeiteinheit informiert wird.
- Die Schaltfelder sind jeweils mit einem seitens des Steuerungsprogramms vorgeschlagenen Zeitwert versehen oder verknüpft. Hierdurch erhält der Benutzer einen konkreten Vorschlag zur Programmoptimierung, den er für eine Übernahme in das Steuerungsprogramm nur noch akzeptieren muss.
- Die Schaltfelder sind jeweils mit einem Grenzwert für den kleinstmöglichen Zeitwert versehen oder verknüpft. Hierdurch sieht der Benutzer auf den ersten Blick bis zu welcher Minimalzeit er diesen Prozessschritt reduzieren kann. Alternativ kann hier eine Auswahl verschiedener Zeitwerte präsentiert werden, die z.B. einer Minimalzeit, einer mittleren Zeitverringerung und einer geringfügigen Zeitverringerung entsprechen.
- Die Schaltfelder sind jeweils mit unterschiedlichen Optimierungsstrategie versehen oder verknüpft, die beispielsweise eine maximale Zeitverkürzung,eine mittlere Zeitverkürzung oder eine geringfügige Zeitverkürzung als Alternativen vorschlagen und die automatische Neuberechnung des Programms nach Auswahl einer Optimierungsstrategie auch ohne genaue benutzerseitige Werteingabe ermöglichen.
- Die Schaltfelder sind jeweils mit einer Bereichsangabe für mögliche Zeitwerte versehen oder verknüpft. Hierdurch sieht der Benutzer auf den ersten Blick, in welchem Wertebereich er sich hier bewegen kann.
- Für die geschwindigkeitsbestimmende Maschinenkomponente ist dasjenige oder diejenigen Schaltfeld/er visuell hervorgehoben, dass oder die für eine Zeitverkürzung des Maschinenkomponentenablaufs bevorzugt im Zeitwert verkürzt werden muss. So kann der Benutzer direkt auf die relevanten Schaltfelder konzentrieren und diese gezielt verändern.

Bei der erfindungsgemäßen Produktionsmaschine ist das Steuerungsprogramm zusätzlich dazu ausgestaltet, nach Eingabe eines oder mehrere neuer Zeitwerte und Übernahme in das Steuerungsprogramm auf der Visualisierungseinrichtung ein darauf basierendes, neues Ablaufdiagramm anzuzeigen. Hierdurch bekommt der Benutzer ein direktes Feedback über die Auswirkungen der von ihm ausgewählten und eingegebenen neuen Zeitwerte.

In einer weiteren Ausführungsform stellt bei der erfindungsgemäßen Produktionsmaschine das Steuerungsprogramm für jede visualisierte Station eine separate Visualisierungsseite auf der Visualisierungseinrichtung bereit, wobei geeignete Schaltflächen zum Wechsel zwischen einzelnen Stations-Visualisierungsseiten bereitgestellt werden. Eine Schaltfläche im Sinne der Erfindung ist als ein Bereich der Benutzeroberfläche definiert, der durch Berühren oder Anklicken/Doppelklicken mittels Cursor einen Programmbefehl auslöst.

In einer bevorzugten Ausführungsform der Erfindung ist bei der Produktionsmaschine das Steuerungsprogramm so ausgestaltet, dass die Neuberechnung des Produktionsprogramms und die Visualisierung der geschwindigkeitsbestimmenden Station und/oder der geschwindigkeitsbestimmenden Maschinenkomponente basierend auf Eingabe von neuen Zeitwerten in die jeweiligen Schaltfelder ohne realen Betrieb der Produktionsmaschine durchgeführt werden können. Dies bietet einen enormen Vorteil, da auf eine zeitaufwändige, kostenintensive (evtl. sogar unter Materialverbrauch stattfindende) Inbetriebnahme der Maschine verzichtet werden kann.

In einem zweiten Aspekt stellt die Erfindung ein Verfahren zum Optimieren der Prozesszeit für eine Produktionsmaschine bereit, wobei die Produktionsmaschine mehrere Stationen und/oder Maschinenkomponenten und eine Maschinensteuerung zur Steuerung der Produktionsmaschine umfasst und zudem ein Steuerungsprogramm mit einer als Visualisierungseinrichtung, vorzugsweise ein berührungsempfindlicher Bildschirm, ausgebildeten interaktiven Benutzerschnittstelle umfasst, wobei das Verfahren die folgenden Schritte umfasst:
(A) Visualisieren zumindest einer, vorzugsweise aller Stationen und/oder Maschinenkomponenten als Ablaufdiagramm unter Hervorhebung der geschwindigkeitsbestimmenden Station und/oder geschwindigkeitsbestimmenden Maschinenkomponente mit Angabe der Zeitphasen und Bereitstellen entsprechender Schaltfelder zur Eingabe von Zeitwerten in Bezug auf die jeweils visualisierte Station bzw. Maschinenkomponente in das Steuerungsprogramm;
(B) Eingabe eines oder mehrerer Zeitwerte in die Schaltfelder und benutzerseitige Freigabe zur Übermittlung in das Steuerungsprogramm;
(C) Berechnung des Produktionsprogramms in seinem Zeitablauf basierend auf dem/den über die Schaltfelder in Schritt (B) eingegebenen Zeitwert/en;
(D) optional die Wiederholung der Visualisierung gemäß Schritt (A) basierend auf dem neu berechneten Produktionsprogramm gemäß Schritt (C), bevorzugt unter Iteration bis zur Erreichung einer maximal verkürzten Prozesszeit.

In einer weiteren Ausführungsform der Erfindung erfolgt bei der dem Verfahren die Hervorhebung der geschwindigkeitsbestimmenden Station und/oder die geschwindigkeitsbestimmende Maschinenkomponente durch eine oder beide der im Folgenden aufgelisteten Visualisierungsformen:
Visualisierungsform 1: Bei dieser Visualisierungsform wird im Ablaufdiagramm eine bezüglich senkrecht zur t-Achse des Ablaufdiagramms verlaufende Linie angezeigt, die den Balken der geschwindigkeitsbestimmenden Station oder geschwindigkeitsbestimmenden Maschinenkomponente, in dem t-Wert schneidet, bei dem der Prozessbalken dieser Station oder dieser Maschinenkomponente im Ablaufdiagramm endet. Dies hat den Vorteil, dass der Benutzer auf den ersten Blick die zeitliche Einbettung der geschwindigkeitsbestimmenden Station/Komponente in den Gesamtprozess erfasst und damit leichter Maßnahmen zur Prozessoptimierung ergreifen kann.
Visualisierungsform 2: Bei dieser Visualisierungsform erfolgt die visuelle Hervorhebung von bereits im Ablaufdiagramm vorhandenen Verknüpfungen, wie einem Zeiger, der das Ende eines ersten geschwindigkeitsbestimmenden Prozessschrittes mit dem Beginn eines zweiten Prozessschritts verknüpft und eine Freigabe definiert. Damit ist für den Benutzer auch die prozedurale Einbettung in den Gesamtprozess sofort ersichtlich.

In einer weiteren Ausführungsform der Erfindung erfolgt bei der dem Verfahren die Hervorhebung der geschwindigkeitsbestimmenden Station und/oder die geschwindigkeitsbestimmende Maschinenkomponente durch eine oder mehrere der im Folgenden aufgelisteten Visualisierungsformen 3 bis 5:
Visualisierungsform 3: Bei dieser Visualisierungsform erfolgt eine numerische Angabe der Verzögerungszeit. Dadurch hat der Benutzer sofort einen Hinweis auf die maximal einsparbare Zeit, die er hier durch Prozessanpassung erreichen kann.
Visualisierungsform 4: Bei dieser Visualisierungsform erfolgt eine Wiedergabe des Namens der geschwindigkeitsbestimmenden Station oder des geschwindigkeitsbestimmenden Schritts in einer Signalfarbe wie Gelb, Orange oder Rot. Dies erlaubt nicht nur eine sofortige Identifizierung der betreffenden geschwindigkeitsbestimmenden Station oder Maschinenkomponente, sondern verringert auch die Chance einer Fehlinterpretation mit anschließender Fehlbedienung.
Visualisierungsform 5: Bei dieser Visualisierungsform erfolgt die Verknüpfung der geschwindigkeitsbestimmenden Station oder des geschwindigkeitsbestimmenden Schrittes mit einem grafischen Symbol, wie beispielsweise einem Zifferblatt mit Zeigern. Derartige Symbole haben den Vorteil, dass sie eine intuitive Erfassung des Sachverhalts leisten und auch international verwendbar sind.

In einer weiteren Ausführungsform ist bei dem erfindungsgemäßen Verfahren das Steuerungsprogramm zusätzlich dazu ausgestaltet, auf der Visualisierungseinrichtung die Zeitphasen der von der Maschinenkomponente durchgeführten Prozessabläufe anzuzeigen.

Die geschieht bevorzugt durch eine zeilenweise Anordnung der Maschinenkomponenten mit der Zeitachse als horizontale Achse und einer Darstellung der Zeitphasen als visuell unterscheidbare Abschnitte eines Zeitstrahls in der Zeile der jeweiligen Maschinenkomponente. Eine solche Darstellung der Zeitphasen als Abschnitte eines Zeitstrahls erfolgt zweckmäßigerweise als Balkendiagramm.

Zweckmäßigerweise werden die Zeitphasen gemäß dem zugeordneten Prozessschritt einem bestimmten Zeitphasentyp zugeordnet. Nichteinschränkende Beispiele für derartige Zeitphasentypen sind Wirkzeit, Verzögerungszeit, Fahrzeit und Vorhaltezeit.

In einer Ausführungsform der Erfindung ist bei der Produktionsmaschine das Steuerungsprogramm zusätzlich dazu ausgestaltet, auf der Visualisierungseinrichtung eine Benutzerhilfe bereitzustellen, die bevorzugt durch Berühren/Anklicken der visuellen Hervorhebungen der geschwindigkeitsbestimmenden Station oder der geschwindigkeitsbestimmenden Maschinenkomponente geöffnet werden kann und die Benutzerhilfe besonders bevorzugt Vorschläge zur Zeitoptimierung des Prozesses beinhaltet. Bevorzugt ist hier eine Ausgestaltung als separates Programmfenster, das sich durch das benutzerseitige Aufrufen innerhalb des vorhandenen Programmfensters öffnet (sog. Popup-Menü).

In einer besonderen Ausführungsform ist bei der Produktionsmaschine das Steuerungsprogramm zusätzlich dazu ausgestaltet, auf der Visualisierungseinrichtung Schaltfelder zur Eingabe von Zeitwerten für die Zeitphasen der von der Maschinenkomponente durchgeführten Prozessabläufe anzuzeigen. Gemäß der Erfindung ist ein Schaltfeld als ein Eingabebereich einer Benutzeroberfläche definiert, in der hier ein oder mehrere Zeitwerte eingegeben werden können.

In bevorzugter Weise ist für das Schaltfeld eine oder mehrere der folgenden Visualisierungsformen vorgesehen:
- Die Schaltfelder werden in einem separaten Fenster dargestellt, da als Kontextmenü damit die umfassende Eingabe von Zeitwerten für die ausgewählte Station oder Maschinenkomponente erlaubt.
- Die Schaltfelder einer Maschinenkomponente sind in der entsprechenden Zeile der Maschinenkomponente angeordnet. Dies erlaubt die intuitive Zuordnung und einfache Werteeingabe.
- Die Abfolge der Schaltfelder innerhalb einer Zeile entspricht der Abfolge der dadurch steuerbaren Zeitphasen der Maschinenkomponente. Auch dies erlaubt eine intuitive und fehlerfreie Benutzung.
- Die Schaltfelder sind spaltenweise nach Zeitphasentyp gruppiert und damit besonders übersichtlich angeordnet.
- Die Schaltfelder sind mit denselben Farben wie die Zeitphasentypen des Ablaufdiagramms dargestellt.
- Die Schaltfelder sind jeweils mit einer Angabe zur jeweils vorliegenden Zeiteinheit wie Sekunden, Minuten oder Stunden versehen oder verknüpft, so dass der Benutzer auf den ersten Blick über die hier vorliegende Zeiteinheit informiert wird.
- Die Schaltfelder sind jeweils mit einem seitens des Steuerungsprogramms vorgeschlagenen Zeitwert versehen oder verknüpft. Hierdurch erhält der Benutzer einen konkreten Vorschlag zur Programmoptimierung, den er für eine Übernahme in das Steuerungsprogramm nur noch akzeptieren muss.
- Die Schaltfelder sind jeweils mit einem Grenzwert für den kleinstmöglichen Zeitwert versehen oder verknüpft. Hierdurch sieht der Benutzer auf den ersten Blick auf welche Minimalzeit er diesen Prozessschritt reduzieren kann. Alternativ kann hier eine Auswahl verschiedener Zeitwerte präsentiert werden, die z.B. einer Minimalzeit, einer mittleren Zeitverringerung und einer geringfügigen Zeitverringerung entsprechen.
- Die Schaltfelder sind jeweils mit unterschiedlichen Optimierungsstrategie versehen oder verknüpft, die beispielsweise eine maximale Zeitverkürzung, eine mittlere Zeitverkürzung oder eine geringfügige Zeitverkürzung als Alternativen vorschlagen und die automatische Neuberechnung des Programms nach Auswahl einer Optimierungsstrategie auch ohne genaue benutzerseitige Werteingabe ermöglichen.
- Die Schaltfelder sind jeweils mit einer Bereichsangabe für mögliche Zeitwerte versehen oder verknüpft. Hierdurch sieht der Benutzer auf den ersten Blick, in welchem Wertebereich er sich hier bewegen kann.
- Für die geschwindigkeitsbestimmende Maschinenkomponente ist dasjenige Schaltfeld oder es sind diejenigen Schaltfelder visuell hervorgehoben, dass oder die für eine Zeitverkürzung des Maschinenkomponentenablaufs bevorzugt im Zeitwert verkürzt werden muss. So kann der Benutzer direkt auf die relevanten Schaltfelder konzentrieren und diese gezielt verändern.

Bei dem erfindungsgemäßen Verfahren ist das Steuerungsprogramm zusätzlich dazu ausgestaltet, nach Eingabe eines oder mehrere neuer Zeitwerte und Übernahme in das Steuerungsprogramm auf der Visualisierungseinrichtung ein darauf basierendes, neues Ablaufdiagramm anzuzeigen. Hierdurch bekommt der Benutzer ein direktes Feedback über die Auswirkungen der von ihm ausgewählten und eingegebenen neuen Zeitwerte.

In einer weiteren Ausführungsform stellt bei dem erfindungsgemäßen Verfahren das Steuerungsprogramm für jede visualisierte Station eine separate Visualisierungsseite auf der Visualisierungseinrichtung bereit, wobei geeignete Schaltflächen zum Wechsel zwischen einzelnen Stations-Visualisierungsseiten bereitgestellt werden.

In einer bevorzugten Ausführungsform der Erfindung ist bei dem Verfahren das Steuerungsprogramm so ausgestaltet, dass die Neuberechnung des Produktionsprogramms und die Visualisierung der geschwindigkeitsbestimmenden Station und/oder der geschwindigkeitsbestimmenden Maschinenkomponente basierend auf Eingabe von neuen Zeitwerten in die jeweiligen Schaltfelder ohne realen Betrieb der Produktionsmaschine durchgeführt werden können. Dies bietet einen enormen Vorteil, da auf eine zeitaufwändige, kostenintensive (evtl. sogar unter Materialverbrauch stattfindende) Inbetriebnahme der Maschine verzichtet werden kann.

Die Erfindung betrifft des Weiteren einen Datenträger mit einem darauf gespeicherten Steuerungsprogramm geeignet zur Ausführung des erfindungsgemäßen Verfahrens oder zur Steuerung einer erfindungsgemäßen Produktionsmaschine.

Es versteht sich, dass Merkmale der vorstehend bzw. in den Ansprüchen beschriebenen Lösungen gegebenenfalls auch kombiniert werden können, um die vorliegend erzielbaren Vorteile und Effekte entsprechend kumuliert umsetzen zu können.

### Kurze Beschreibung der Figuren

Zusätzlich sind weitere Merkmale, Effekte und Vorteile vorliegender Erfindung anhand anliegender Zeichnung und nachfolgender Beschreibung erläutert. Komponenten, welche in den einzelnen Figuren wenigstens im Wesentlichen hinsichtlich ihrer Funktion übereinstimmen, sind hierbei mit gleichen Bezugszeichen gekennzeichnet, wobei die Komponenten nicht in allen Figuren beziffert und erläutert sein müssen.

In den Zeichnungen zeigen:
- Fig. 1: eine schematische Darstellung der erfindungsgemäßen Produktionsmaschine;
- Fig.2: eine Ausführungsform der Visualisierung einer Station auf der Visualisierungseinrichtung mit hervorgehobener geschwindigkeitsbestimmender Station gemäß der vorliegenden Erfindung;
- Fig.3: eine Ausführungsform der Visualisierung der Maschinenkomponenten einer Station auf der Visualisierungseinrichtung mit hervorgehobener geschwindigkeitsbestimmender Maschinenkomponente gemäß der vorliegenden Erfindung;
- Fig.4: eine erfindungsgemäße Ausführungsform gemäß Figur 3 mit zusätzlich angezeigten Schaltfeldern zur Eingabe von Zeitwerten;
- Fig. 5: eine Ausführungsform des erfindungsgemäßen Verfahrens in seiner Darstellung als schematisches Ablaufdiagramm.

### Ausführungsbeispiele

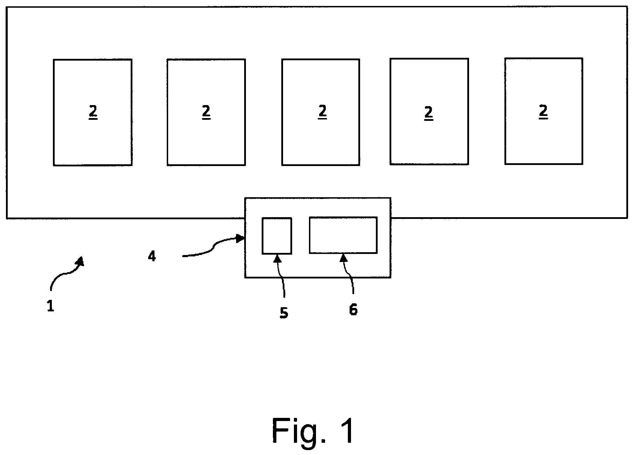

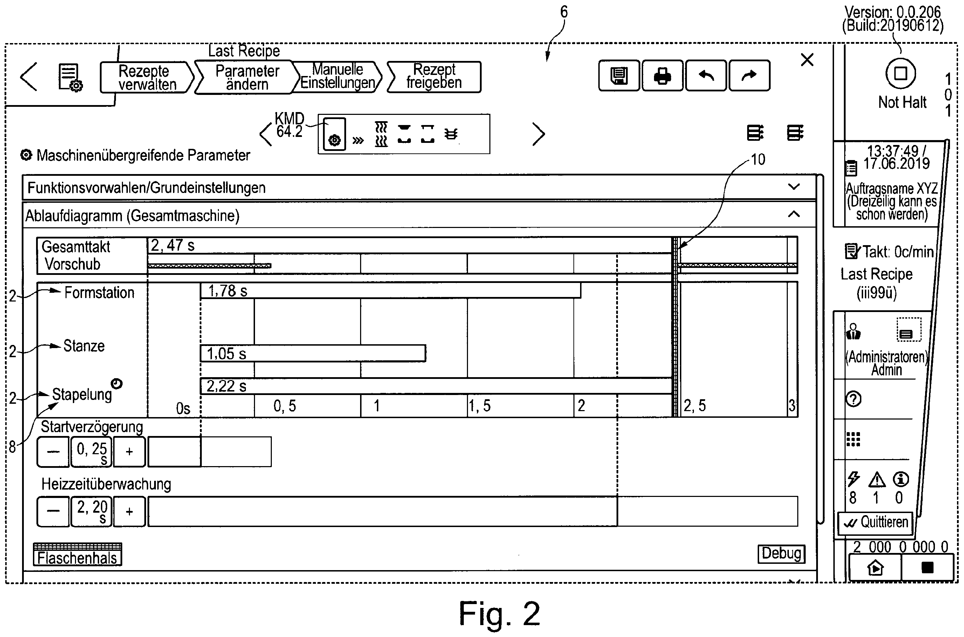

Fig. 1 zeigt eine schematische Darstellung der erfindungsgemäßen Produktionsmaschine 1 zur Kunststoffverarbeitung, die mehrere Stationen 2 (hier fünf Stationen wie beispielsweise eine Vorheizstation, eine Heizstation, eine Formstation, eine Schneidestation und eine Stapelstation einer Thermoformanlage zum Tiefziehen von Formteilen aus einer erwärmten Kunststoff-Folienbahn) und eine Maschinensteuerung 4 zur Steuerung der kunststoffverarbeitende Maschine 1 umfasst. Die Maschinensteuerung 4 umfasst dabei ein Steuerungsprogramm 5 mit einer Visualisierungseinrichtung 6, die hier als berührungsempfindlicher Bildschirm ausgebildet ist, wobei das Steuerungsprogramm 5 dazu ausgestaltet ist, auf der Visualisierungseinrichtung 6 zumindest eine, vorzugsweise alle, der Stationen 2 (und/oder Maschinenkomponenten 3 hier nicht dargestellt) in ihrer Funktion bei der Produktion in jeweils einer Darstellung für jede dieser Maschinenkomponenten zu visualisieren und entsprechende Schaltfelder 13 zur Eingabe von Zeitwerten in Bezug auf die jeweils visualisierte Maschinenkomponente 3 bereitzustellen. Für Details zur Visualisierungseinrichtung 6 wird auf die Figuren 2 bis 4 verwiesen. Das Steuerungsprogramm 5 kann dabei so ausgestaltet sein, dass die Visualisierung der Stationen 2 oder Maschinenkomponenten 3 in ihrer Funktion bei der Produktion und die Eingabe von Prozessparametern in die jeweiligen Schaltfelder 13 ohne realen Betrieb der Produktionsmaschine 1 durchgeführt werden kann. Das Steuerungsprogramm 5 kann dabei für jede visualisierte Station 2 eine separate Visualisierungsseite 15 auf der Visualisierungseinrichtung 5 bereitstellen, wobei geeignete Schaltfelder 16 zum Wechsel zwischen einzelnen Visualisierungsseiten 15 bereitgestellt werden.

Fig.2 zeigt eine Ausführungsform der Erfindung durch Visualisierung der Stationen 2 (hier Formstation, Stanze und Stapelung) auf der Visualisierungseinrichtung 6 mit Hervorhebung der Stapelung 8 als geschwindigkeitsbestimmende Station. Hier wird zusätzlich durch die vertikale Linie 10 angezeigt, wo der Prozessablauf der Stapelung als Balken im Ablaufdiagramm endet und entsprechend sich der Vorschub als darauffolgender Prozess anschließt.

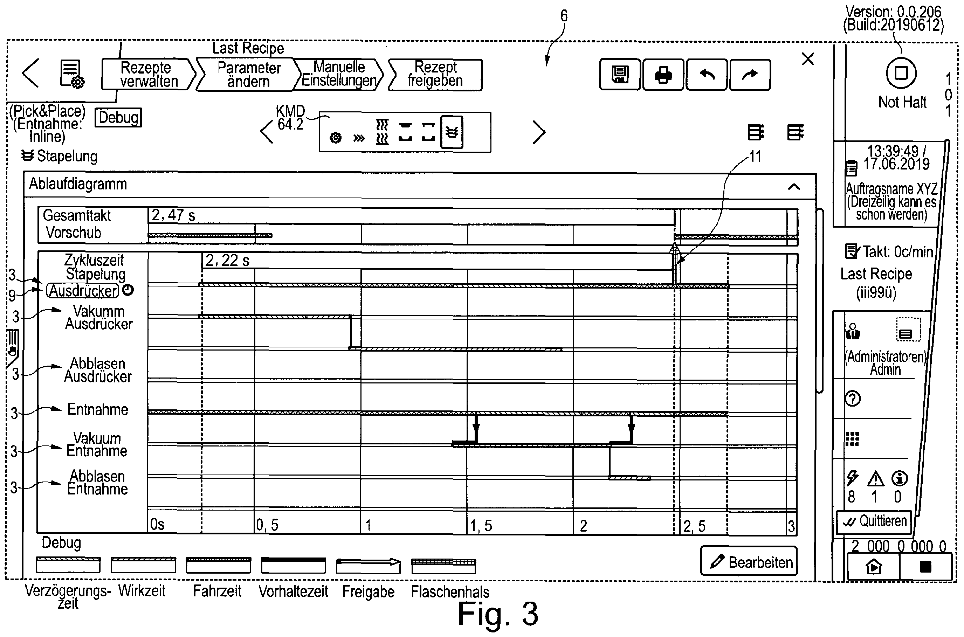

Fig.3 zeigt eine Ausführungsform der Erfindung durch Visualisierung der Maschinenkomponenten 3 der Stapelungsstation auf der Visualisierungseinrichtung 6 mit Hervorhebung des Ausdrückers als geschwindigkeitsbestimmender Maschinenkomponente 9. Hier wird zusätzlich durch den vertikalen Zeiger 11 angezeigt, wo der Prozessablauf der Stapelung als Balken im Ablaufdiagramm endet und dadurch die Freigabe für den Start des Vorschubs als Folgeprozess erfolgt.

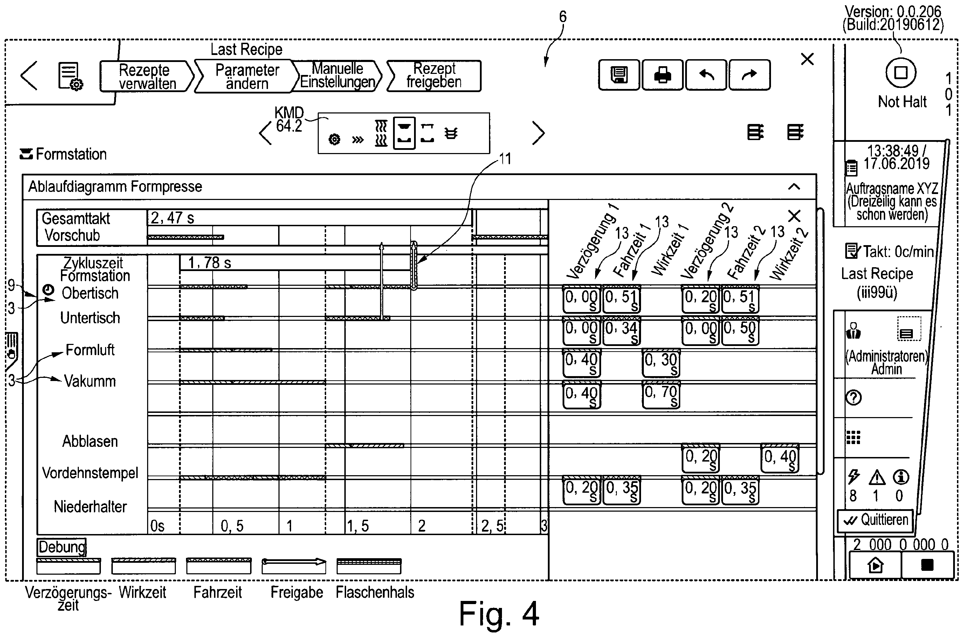

Fig.4 zeigt eine Ausführungsform der Erfindung gemäß Figur 3 mit zusätzlicher Visualisierung der Schaltfelder 13 zur Eingabe neuer Zeitwerte. Die Schaltfelder sind hierbei in der entsprechenden Zeile der zugehörigen Maschinenkomponente angeordnet und geben die einzelnen Zeitphasen in derselben Abfolge und denselben zeitphasentypischen Farbe wieder. Spaltenweise erfolgt hier eine Gruppierung nach Zeitphasentypen. Jedes Schaltfeld trägt in der rechten unteren Ecke die Angabe der jeweiligen Zeiteinheit "s" (= Sekunde).

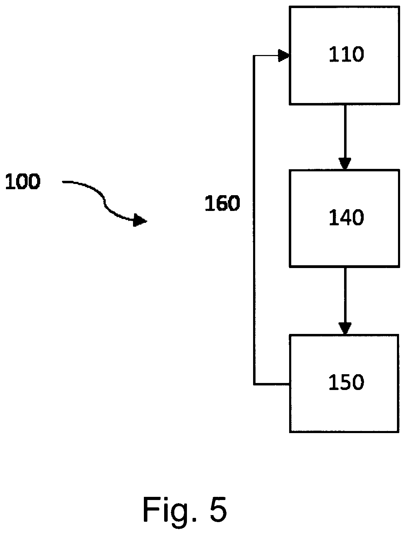

Fig. 5 zeigt ein Verlaufsdiagramm zur Darstellung des erfindungsgemäßen Verfahrens 100 mit dem initialen Schritt 110 als Visualisierung zumindest einer, vorzugsweise aller Stationen 2 und/oder Maschinenkomponenten 3 als Ablaufdiagramm 7 unter Hervorhebung der geschwindigkeitsbestimmenden Station 8 und/oder geschwindigkeitsbestimmenden Maschinenkomponente 9 mit Angabe der Zeitphasen 12 und Bereitstellen entsprechender Schaltfelder 13 zur Eingabe von Zeitwerten in Bezug auf die jeweils visualisierte Station 2 bzw. Maschinenkomponente 3 in das Steuerungsprogramm 5; gefolgt von dem Schritt 140 der benutzerseitigen Eingabe eines oder mehrerer Zeitwerte in die Schaltfelder 13 und benutzerseitige Freigabe zur Übermittlung in das Steuerungsprogramm 5 mit der dadurch erfolgenden Anpassung des Produktionsprogramms im Schritt der Neuberechnung 120 des Produktionsprogramms in seinem Zeitablauf basierend auf dem/den über die Schaltfelder 13 in Schritt 140 eingegebenen Zeitwert/en. Optional können hier gemäß 160 die Verfahrensschritte 110, 140 und 150 zur weitergehenden Optimierung erneut durchlaufen werden.

An dieser Stelle sei explizit darauf hingewiesen, dass Merkmale der vorstehend bzw. in den Ansprüchen und/oder Figuren beschriebenen Lösungen gegebenenfalls auch kombiniert werden können, um auch erläuterte Merkmale, Effekte und Vorteile entsprechend kumuliert umsetzen bzw. erzielen zu können.

Es versteht sich, dass es sich bei dem vorstehend erläuterten Ausführungsbeispiel lediglich um eine erste Ausgestaltung der vorliegenden Erfindung handelt. Insofern beschränkt sich die Ausgestaltung der Erfindung nicht auf dieses Ausführungsbeispiel.

### Liste der verwendeten Bezugszeichen

- 1: Produktionsmaschine, beispielweise eine Thermoformmaschine oder eine Blasformmaschine
- 2: Station
- 3: Maschinenkomponente
- 4: Maschinensteuerung
- 5: Steuerungsprogramm
- 6: Visualisierungseinrichtung
- 7: Ablaufdiagramm
- 8: hervorgehobene (weil geschwindigkeitsbestimmende) Station
- 9: hervorgehobene (weil geschwindigkeitsbestimmende) Maschinenkomponente
- 10: vertikale Linie zur Visualisierung einer Verknüpfung der geschwindigkeitsbestimmenden Station (hier Stapelung) mit einem darauffolgenden Prozessschritt (hier Vorschub)
- 11: vertikaler Zeiger zur Visualisierung einer Freigabe als geschwindigkeitsbestimmender Schritt des Obertisches als Maschinenkomponente, wobei der Zeiger auf den dadurch freigegebenen nachfolgenden Prozessschritt hinweist (hier Vorschub)
- 12: Zeitphasen
- 13: Schaltfeld(er)
- 14: Benutzerhilfe
- 15: Separate Stations-Visualisierungsseite
- 16: Schaltfläche zum Wechsel zwischen einzelnen Stations-Visualisierungsseiten

- 100: Verfahren zur Prozesszeitoptimierung einer Produktionsmaschine
- 110: Visualisierung eines Ablaufdiagramms zumindest einiger der Stationen mit Angabe der geschwindigkeitsbestimmenden Stationen und geschwindigkeitsbestimmenden Maschinenkomponenten nebst Visualisierung von Schaltfeldern für die Eingabe geänderter Zeitwerte
- 140: Benutzerseitige Eingabe eines oder mehrerer Zeitwerte in das Schaltfeld nebst Befehl zur Übernahme in das Steuerungsprogramm
- 150: Anpassung des Produktionsprogramms auf Basis der variierten Zeitwerte
- 160: Erneutes (optional automatisiertes) Durchlaufen der Verfahrensschritte zur weitergehenden Optimierung der Prozesszeit

## Patentansprüche

1. Eine Produktionsmaschine (1) umfassend mehrere Stationen (2), die jeweils mehrere Maschinenkomponenten (3) umfassen, und eine Maschinensteuerung (4) zur Steuerung der Produktionsmaschine (1) umfassend ein Steuerungsprogramm (5) mit einer Visualisierungseinrichtung (6), wobei das Steuerungsprogramm (5) dazu ausgestaltet ist, auf der Visualisierungseinrichtung (6) die Stationen (2) und/oder die Maschinenkomponenten (3) einer Station als Ablaufdiagramm (7) anzuzeigen und dabei die geschwindigkeitsbestimmende Station (8) und/oder die geschwindigkeitsbestimmende Maschinenkomponente (9) hervorzuheben, wobei
(A5) die Visualisierungseinrichtung (6) als interaktive Benutzerschnittstelle eingerichtet ist, wobei eine Ausbildung als berührungsempfindlicher Bildschirm bevorzugt ist, wobei
(A8) das Steuerungsprogramm (5) zusätzlich dazu ausgestaltet ist, nach Eingabe eines oder mehrere neuer Zeitwerte und Übernahme in das Steuerungsprogramm auf der Visualisierungseinrichtung (6) ein darauf basierendes, neues Ablaufdiagramm (7) anzuzeigen, und wobei
(A2 (i, ii)) die Hervorhebung der geschwindigkeitsbestimmenden Station (8) und/oder der geschwindigkeitsbestimmenden Maschinenkomponente (9) durch eine oder beide der folgenden Visualisierungsformen erfolgt:
(i) eine bezüglich senkrecht zur t-Achse des Ablaufdiagramms verlaufende Linie (10), die den Balken der geschwindigkeitsbestimmenden Station oder dieser Maschinenkomponente, in dem t-Wert berührt, bei dem der Prozessbalken dieser Station oder dieser Maschinenkomponente im Ablaufdiagramm endet;
(ii) visuelle Hervorhebung von bereits im Ablaufdiagramm vorhandenen Verknüpfungen, wie einem Zeiger (11), der das Ende eines ersten geschwindigkeitsbestimmenden Prozessschrittes mit dem Beginn eines zweiten Prozessschritts verknüpft und eine Freigabe definiert.

2. Die Produktionsmaschine (1) nach Anspruch 1,
**dadurch gekennzeichnet, dass**
die Hervorhebung der geschwindigkeitsbestimmenden Station (8) und/oder der geschwindigkeitsbestimmenden Maschinenkomponente (9) durch eine oder mehrere der folgenden Visualisierungsformen erfolgt:
(iii) eine numerische Angabe der Verzögerungszeit;
(iv) eine Wiedergabe des Namens der geschwindigkeitsbestimmenden Station oder der geschwindigkeitsbestimmenden Maschinenkomponente in einer Signalfarbe wie Gelb, Orange oder Rot,
(v) die Verknüpfung der geschwindigkeitsbestimmenden Station (8) oder des geschwindigkeitsbestimmenden Schrittes (9) mit einem grafischen Symbol, wie beispielsweise einem Zifferblatt mit Zeigern.

3. Die Produktionsmaschine (1) nach Anspruch 1 oder 2,
**dadurch gekennzeichnet, dass**
das Steuerungsprogramm (5) zusätzlich dazu ausgestaltet ist, auf der Visualisierungseinrichtung (6) die Zeitphasen (12) der von der Maschinenkomponente (3) durchgeführten Prozessabläufe anzuzeigen, bevorzugt durch eine zeilenweise Anordnung der Maschinenkomponenten mit der Zeitachse als horizontale Achse und einer Darstellung der Zeitphasen (12) als visuell unterscheidbare Abschnitte eines Zeitstrahls in der Zeile der jeweiligen Maschinenkomponente.

4. Die Produktionsmaschine (1) nach Anspruch 3,
**dadurch gekennzeichnet, dass**
die Zeitphasen (12) einem bestimmten Zeitphasentyp zugeordnet sind, der bevorzugt ausgewählt ist aus der Gruppe aufweisend Wirkzeit, Verzögerungszeit, Fahrzeit und Vorhaltezeit.

5. Die Produktionsmaschine (1) nach einem der voranstehenden Ansprüche,
**dadurch gekennzeichnet, dass**
das Steuerungsprogramm (5) zusätzlich dazu ausgestaltet ist, auf der Visualisierungseinrichtung (6) eine Benutzerhilfe bereitzustellen, die bevorzugt durch Berühren/Anklicken der visuellen Hervorhebungen der geschwindigkeitsbestimmenden Station (8) oder der geschwindigkeitsbestimmenden Maschinenkomponente (9) geöffnet werden kann und die Benutzerhilfe besonders bevorzugt Vorschläge zur Zeitoptimierung des Prozesses beinhaltet.

6. Die Produktionsmaschine (1) nach einem der voranstehenden Ansprüche,
**dadurch gekennzeichnet, dass**
das Steuerungsprogramm (5) zusätzlich dazu ausgestaltet ist, auf der Visualisierungseinrichtung (6) Schaltfelder (13) zur Eingabe von Zeitwerten für die Zeitphasen der von der Maschinenkomponente durchgeführten Prozessabläufe anzuzeigen, wobei bevorzugt eine oder mehrere der folgenden Visualisierungsformen vorgesehen sind:
• die Schaltfelder in einem separaten Fenster dargestellt werden,
• die Schaltfelder einer Maschinenkomponente in der entsprechenden Zeile der Maschinenkomponente angeordnet sind,
• die Abfolge der Schaltfelder innerhalb einer Zeile der Abfolge der dadurch steuerbaren Zeitphasen der Maschinenkomponente entspricht,
• die Schaltfelder spaltenweise nach Zeitphasentyp gruppiert sind,
• die Schaltfelder mit denselben Farben wie die Zeitphasentypen des Ablaufdiagramms dargestellt sind,
• die Schaltfelder jeweils mit einer Angabe zur jeweils vorliegenden Zeiteinheit wie Sekunden, Minuten oder Stunden versehen oder verknüpft sind,
• die Schaltfelder jeweils mit einem seitens des Steuerungsprogramms vorgeschlagenen Zeitwertes versehen oder verknüpft sind,
• die Schaltfelder mit einem Grenzwert für den kleinstmöglichen Zeitwert versehen oder verknüpft sind,
• die Schaltfelder jeweils mit einer Bereichsangabe für mögliche Zeitwerte versehen oder verknüpft sind,
• für die geschwindigkeitsbestimmende Maschinenkomponente dasjenige Schaltfeld oder diejenigen Schaltfelder visuell hervorgehoben ist/sind, dass oder die für eine Zeitverkürzung des Maschinenkomponentenablaufs bevorzugt im Zeitwert verkürzt werden muss,
• die Schaltfelder jeweils mit unterschiedlichen Optimierungsstrategie versehen oder verknüpft sind, die beispielsweise eine maximale Zeitverkürzung, eine mittlere Zeitverkürzung oder eine geringfügige Zeitverkürzung als Alternativen vorschlagen und die automatische Neuberechnung des Programms nach Auswahl einer Optimierungsstrategie auch ohne genaue benutzerseitige Werteingabe ermöglichen.

7. Die Produktionsmaschine (1) nach einem der voranstehenden Ansprüche,
**dadurch gekennzeichnet,**
**dass** das Steuerungsprogramm (5) für jede visualisierte Station (2) eine separate Visualisierungsseite (15) auf der Visualisierungseinrichtung (6) bereitstellt, wobei geeignete Schaltflächen (16) zum Wechsel zwischen einzelnen Stations-Visualisierungsseiten (15) bereitgestellt werden.

8. Die Produktionsmaschine (1) nach einem der voranstehenden Ansprüche,
**dadurch gekennzeichnet,**
**dass** das Steuerungsprogramm (5) so ausgestaltet ist, dass die Neuberechnung des Produktionsprogramms und die Visualisierung der geschwindigkeitsbestimmenden Station (8) und/oder der geschwindigkeitsbestimmenden Maschinenkomponente (9) basierend auf Eingabe von neuen Zeitwerten in die jeweiligen Schaltfelder (13) ohne realen Betrieb der Produktionsmaschine (1) durchgeführt werden können.

9. **Verfahren (100)** zum Optimieren der Prozesszeit für eine Produktionsmaschine (1) umfassend mehrere Stationen (2), die jeweils mehrere Maschinenkomponenten (3) umfassen, und eine Maschinensteuerung (4) zur Steuerung der Produktionsmaschine (1) umfassend ein Steuerungsprogramm (5) mit einer als Visualisierungseinrichtung (6), vorzugsweise ein berührungsempfindlicher Bildschirm, ausgebildeten interaktiven Benutzerschnittstelle, umfassend die folgenden Schritte:
(A) Visualisieren (110) zumindest einer, vorzugsweise aller Stationen (2) und/oder Maschinenkomponenten (3) als Ablaufdiagramm (7) unter Hervorhebung der geschwindigkeitsbestimmenden Station (8) und/oder geschwindigkeitsbestimmenden Maschinenkomponente (9) mit Angabe der Zeitphasen (12) und Bereitstellen entsprechender Schaltfelder (13) zur Eingabe von Zeitwerten in Bezug auf die jeweils visualisierte Station (2) bzw. Maschinenkomponente (3) in das Steuerungsprogramm (5);
(B) Eingabe eines oder mehrerer Zeitwerte in die Schaltfelder (13) und benutzerseitige Freigabe zur Übermittlung in das Steuerungsprogramm (5);
(C) Berechnung (120) des Produktionsprogramms in seinem Zeitablauf basierend auf dem/den über die Schaltfelder (13) in Schritt (B) eingegebenen Zeitwert/en;
(D) optional die Wiederholung der Visualisierung gemäß Schritt (A) basierend auf dem neu berechneten Produktionsprogramm gemäß Schritt (C), bevorzugt unter Iteration bis zur Erreichung einer maximal verkürzten Prozesszeit,
wobei
(A17) das Steuerungsprogramm (5) zusätzlich dazu ausgestaltet ist, nach Eingabe eines oder mehrere neuer Zeitwerte und Übernahme in das Steuerungsprogramm (5) auf der Visualisierungseinrichtung (6) ein darauf basierendes, neues Ablaufdiagramm (7) anzuzeigen, und wobei
(A12 (i, ii)) die Hervorhebung der geschwindigkeitsbestimmenden Station (8) und/oder der geschwindigkeitsbestimmenden Maschinenkomponente (9) durch eine oder beide der folgenden Visualisierungsformen erfolgt:
(i) eine bezüglich senkrecht zur t-Achse des Ablaufdiagramms verlaufende Linie (10), die den Balken der geschwindigkeitsbestimmenden Station oder dieser Maschinenkomponente, in dem t-Wert berührt, bei dem der Prozessbalken dieser Station oder dieser Maschinenkomponente im Ablaufdiagramm endet;
(ii) visuelle Hervorhebung von bereits im Ablaufdiagramm vorhandenen Verknüpfungen, wie einem Zeiger (11), der das Ende eines ersten geschwindigkeitsbestimmenden Prozessschrittes mit dem Beginn eines zweiten Prozessschritts verknüpft und eine Freigabe definiert.

10. Verfahren (100) nach Anspruch 9,
**dadurch gekennzeichnet, dass**
die Hervorhebung der geschwindigkeitsbestimmenden Station (8) und/oder der geschwindigkeitsbestimmenden Maschinenkomponente (9) durch eine oder mehrere der folgenden Visualisierungsformen erfolgt:
(iii) eine numerische Angabe der Verzögerungszeit
(iv) eine Wiedergabe des Namens der geschwindigkeitsbestimmenden Station (8) oder der geschwindigkeitsbestimmenden Maschinenkomponente (9) in einer Signalfarbe wie Gelb, Orange oder Rot.
(v) Verknüpfung der geschwindigkeitsbestimmenden Station (8) oder der geschwindigkeitsbestimmenden Maschinenkomponente (9) mit einem grafischen Symbol, wie beispielsweise einem Zifferblatt mit Zeigern.

11. Verfahren (100) nach Anspruch 9 oder 10,
**dadurch gekennzeichnet, dass**
das Steuerungsprogramm (5) zusätzlich dazu ausgestaltet ist, auf der Visualisierungseinrichtung (6) die Zeitphasen (12) der von der Maschinenkomponente (3) durchgeführten Prozessabläufe anzuzeigen, bevorzugt durch eine zeilenweise Anordnung der Maschinenkomponenten (3) mit der Zeitachse als horizontale Achse und einer Darstellung der Zeitphasen (12) als visuell unterscheidbare Abschnitte eines Zeitstrahls in der Zeile der jeweiligen Maschinenkomponente (3).

12. Verfahren (100) nach Anspruch 9,
**dadurch gekennzeichnet, dass**
die Zeitphasen (12) einem bestimmten Zeitphasentyp zugeordnet sind, der bevorzugt ausgewählt ist aus der Gruppe aufweisend Wirkzeit, Verzögerungszeit, Fahrzeit und Vorhaltezeit.

13. Verfahren (100) nach einem der Ansprüche 9 bis 12
**dadurch gekennzeichnet, dass**
das Steuerungsprogramm (5) zusätzlich dazu ausgestaltet ist, auf der Visualisierungseinrichtung (6) eine Benutzerhilfe (14) bereitzustellen, die bevorzugt durch Berühren/Anklicken der visuellen Hervorhebungen der der geschwindigkeitsbestimmenden Station oder dieser Maschinenkomponente geöffnet werden kann und die Benutzerhilfe besonders bevorzugt Vorschläge zur Zeitoptimierung des Prozesses beinhaltet.

14. Verfahren (100) nach einem der Ansprüche 9 bis 13,
**dadurch gekennzeichnet, dass**
das Steuerungsprogramm (5) zusätzlich dazu ausgestaltet ist, auf der Visualisierungseinrichtung (6) Schaltfelder (13) zur Eingabe von Zeitwerten für die Zeitphasen (12) der von der Maschinenkomponente (3) durchgeführten Prozessabläufe anzuzeigen, wobei bevorzugt eine oder mehrere der folgenden Visualisierungsformen vorgesehen sind:
• die Schaltfelder (13) in einem separaten Fenster dargestellt werden,
• die Schaltfelder (13) einer Maschinenkomponente in der entsprechenden Zeile der Maschinenkomponente angeordnet sind,
• die Abfolge der Schaltfelder (13) innerhalb einer Zeile der Abfolge der dadurch steuerbaren Zeitphasen der Maschinenkomponente entspricht,
• die Schaltfelder (13) spaltenweise nach Zeitphasentyp gruppiert sind,
• die Schaltfelder (13) mit denselben Farben wie die Zeitphasentypen des Ablaufdiagramms dargestellt sind,
• die Schaltfelder (13) jeweils mit einer Angabe zur jeweils vorliegenden Zeiteinheit wie Sekunden, Minuten oder Stunden versehen oder verknüpft sind,
• die Schaltfelder (13) jeweils mit einem seitens des Steuerungsprogramms vorgeschlagenen Zeitwertes versehen oder verknüpft sind,
• die Schaltfelder (13) mit einem Grenzwert für den kleinstmöglichen Zeitwert versehen oder verknüpft sind,
• die Schaltfelder (13) jeweils mit einer Bereichsangabe für mögliche Zeitwerte versehen oder verknüpft sind,
• für die geschwindigkeitsbestimmende Maschinenkomponente (9) das Schaltfeld oder die Schaltfelder (13) visuell hervorgehoben ist/sind, dass oder die für eine Zeitverkürzung des Maschinenkomponentenablaufs bevorzugt im Zeitwert verkürzt werden muss;
• die Schaltfelder jeweils mit unterschiedlichen Optimierungsstrategie versehen oder verknüpft sind, die beispielsweise eine maximale Zeitverkürzung, eine mittlere Zeitverkürzung oder eine geringfügige Zeitverkürzung als Alternativen vorschlagen und die automatische Neuberechnung des Programms nach Auswahl einer Optimierungsstrategie auch ohne genaue benutzerseitige Werteingabe ermöglichen.

15. Verfahren (100) nach einem der Ansprüche 9 bis 14,
**dadurch gekennzeichnet,**
**dass** das Steuerungsprogramm (5) für jede visualisierte Station (2) eine separate Visualisierungsseite (15) auf der Visualisierungseinrichtung (6) bereitstellt, wobei geeignete Schaltflächen (16) zum Wechsel zwischen einzelnen Stations-Visualisierungsseiten (15) bereitgestellt werden.

16. Verfahren (100) nach einem der Ansprüche 9 bis 15,
**dadurch gekennzeichnet,**
**dass** die Neuberechnung des Produktionsprogramms und die Visualisierung der geschwindigkeitsbestimmenden Station (8) und/oder der geschwindigkeitsbestimmenden Maschinenkomponente (9) basierend auf Eingabe von neuen Zeitwerten in die jeweiligen Schaltfelder (13) ohne realen Betrieb der Produktionsmaschine (1) durchgeführt werden können.

## Claims

1. Production machine (1) comprising a plurality of stations (2), each comprising a plurality of machine components (3), and a machine controller (4) for controlling the production machine (1) comprising a control program (5) with a visualization device (6), wherein the control program (5) is designed to display on the visualization device (6) the stations (2) and/or the machine components (3) of a station as a flow chart (7) and thereby highlight the speed-determining station (8) and/or the speed-determining machine component (9),
wherein
(A5) the visualization device (6) is set up as an interactive user interface, wherein a design as a touch-sensitive screen is preferred, wherein
(A8) the control program (5) is additionally designed to display on the visualization device (6) a new flow chart (7) based thereon after one or more new time values have been input and adopted into the control program, and wherein (A2 (i, ii)) the highlighting of the speed-determining station (8) and/or the speed-determining machine component (9) is done by one or both of the following visualization forms:
(i) a line (10) perpendicular to the t-axis of the flow chart that touches the bar of the speed-determining station or this machine component at the t-value at which the process bar of this station or this machine component ends in the flow chart;
(ii) visual highlighting of links already present in the flow chart, such as a pointer (11) linking the end of a first speed-determining process step with the beginning of a second process step and defining a release.

2. Production machine (1) according to Claim 1,
**characterized in that**
the highlighting of the speed-determining station (8) and/or the speed-determining machine component (9) is done by one or more of the following visualization forms:
(iii) a numerical indication of the delay time;
(iv) a reproduction of the name of the speed-determining station or the speed-determining machine component in a signal colour such as yellow, orange or red,
(v) linking the speed-determining station (8) or the speed-determining step (9) to a graphical symbol, such as a dial with hands.

3. Production machine (1) according to Claim 1 or 2,
**characterized in that**
the control program (5) is additionally designed to display on the visualization device (6) the time phases (12) of the process sequences carried out by the machine component (3), preferably by a row-wise arrangement of the machine components with the time axis as the horizontal axis and a display of the time phases (12) as visually distinguishable sections of a timeline in the row of the respective machine component.

4. Production machine (1) according to Claim 3,
**characterized in that**
the time phases (12) are assigned to a specific time phase type, which is preferably selected from the group comprising active time, delay time, travelling time and derivative time.

5. Production machine (1) according to any of the preceding claims,
**characterized in that**
the control program (5) is additionally designed to provide on the visualization device (6) a user aid, which can preferably be opened by touching/clicking on the visual highlighting of the speed-determining station (8) or the speed-determining machine component (9), and the user aid particularly preferably includes suggestions for time optimization of the process.

6. Production machine (1) according to any of the preceding claims,
**characterized in that**
the control program (5) is additionally designed to display on the visualization device (6) switching fields (13) for inputting time values for the time phases of the process sequences carried out by the machine component, wherein preferably one or more of the following visualization forms are provided:
• the switching fields are displayed in a separate window,
• the switching fields of a machine component are arranged in the corresponding row of the machine component,
• the sequence of the switching fields within a row corresponds to the sequence of the time phases of the machine component controllable thereby,
• the switching fields are grouped column-wise by time phase type,
• the switching fields are represented with the same colours as the time phase types of the flow chart,
• the switching fields are each provided or linked with an indication of the respective unit of time such as seconds, minutes or hours,
• the switching fields are each provided with or linked to a time value proposed by the control program,
• the switching fields are provided or linked with a limit value for the smallest possible time value,
• the switching fields are each provided or linked with a range indication for possible time values,
• for the speed-determining machine component, that switching field or those switching fields is/are visually highlighted that must preferably be shortened in the time value for a time reduction of the machine component sequence,
• the switching fields are each provided with or linked to different optimization strategies, which, for example, propose a maximum time reduction, a mean time reduction or a minimum time reduction as alternatives and enable the automatic recalculation of the program after selection of an optimization strategy even without exact user input of values.

7. Production machine (1) according to any of the preceding claims,
**characterized**
**in that** the control program (5) provides a separate visualization page (15) on the visualization device (6) for each visualized station (2), wherein suitable buttons (16) for switching between individual station visualization pages (15) are provided.

8. Production machine (1) according to any of the preceding claims,
**characterized**
**in that** the control program (5) is designed such that the recalculation of the production program and the visualization of the speed-determining station (8) and/or the speed-determining machine component (9) can be performed based on inputting new time values into the respective switching fields (13) without real operation of the production machine (1).

9. **Method (100)** for optimizing the process time for a production machine (1) comprising a plurality of stations (2), each comprising a plurality of machine components (3), and a machine controller (4) for controlling the production machine (1) comprising a control program (5) having an interactive user interface designed as a visualization device (6), preferably a touch-sensitive screen, comprising the following steps:
(A) Visualizing (110) at least one, preferably all stations (2) and/or machine components (3) as a flow chart (7), highlighting the speed-determining station (8) and/or speed-determining machine component (9) with indication of the time phases (12) and providing corresponding switching fields (13) for inputting time values with respect to the respective visualized station (2) or machine component (3) into the control program (5);
(B) Inputting one or more time values into the switching fields (13) and user release thereof for transmission to the control program (5);
(C) Calculation (120) of the production program over time based on the time value (s) input via the switching fields (13) in step (B);
(D) optionally repeating the visualization according to step (A) based on the recalculated production program according to step (C), preferably with iteration until a maximum shortened process time is achieved,
wherein
A17) the control program (5) is additionally designed to display a new flow chart (7) based thereon on the visualization device (6) after inputting one or more new time values and transferring them to the control program (5), and wherein
(A12 (i, ii)) the highlighting of the speed-determining station (8) and/or the speed-determining machine component (9) is done by one or both of the following visualization forms:
(i) a line (10) perpendicular to the t-axis of the flow chart that touches the bar of the speed-determining station or this machine component at the t-value at which the process bar of this station or this machine component ends in the flow chart;
(ii) visual highlighting of links already present in the flow chart, such as a pointer (11) linking the end of a first speed-determining process step with the beginning of a second process step and defining a release.

10. Method (100) according to Claim 9,
**characterized in that**
the highlighting of the speed-determining station (8) and/or the speed-determining machine component (9) is done by one or more of the following visualization forms:
(iii) a numerical indication of the delay time
(iv) a reproduction of the name of the speed-determining station (8) or the speed-determining machine component (9) in a signal colour such as yellow, orange or red.
(v) Linking the speed-determining station (8) or the speed-determining machine component (9) to a graphical symbol, such as a dial with hands.

11. Method (100) according to Claim 9 or 10,
**characterized in that**
the control program (5) is additionally designed to display on the visualization device (6) the time phases (12) of the process sequences carried out by the machine component (3), preferably by a row-wise arrangement of the machine components (3) with the time axis as the horizontal axis and a display of the time phases (12) as visually distinguishable sections of a timeline in the row of the respective machine component (3).

12. Method (100) according to Claim 9,
**characterized in that**
the time phases (12) are assigned to a specific time phase type, which is preferably selected from the group comprising active time, delay time, travelling time and derivative time.

13. Method (100) according to any of Claims 9 to 12,
**characterized in that**
the control program (5) is additionally designed to provide a user aid (14) on the visualization device (6), which can preferably be opened by touching/clicking the visual highlighting of the speed-determining station or this machine component, and the user aid particularly preferably includes suggestions for time-optimizing the process.

14. Method (100) according to any of Claims 9 to 13,
**characterized in that**
the control program (5) is additionally designed to display on the visualization device (6) switching fields (13) for inputting time values for the time phases (12) of the process sequences carried out by the machine component (3), wherein preferably one or more of the following visualization forms are provided:
• the switching fields (13) are displayed in a separate window,
• the switching fields (13) of a machine component are arranged in the corresponding row of the machine component,
• the sequence of the switching fields (13) within a row corresponds to the sequence of the time phases of the machine component controllable thereby,
• the switching fields (13) are grouped column-wise by time phase type,
• the switching fields (13) are displayed with the same colours as the time phase types of the flow chart,
• the switching fields (13) are each provided with or linked to an indication of the unit of time present in each case, such as seconds, minutes or hours,
• the switching fields (13) are each provided with or linked to a time value proposed by the control program,
• the switching fields (13) are provided with or linked to a limit value for the smallest possible time value,
• the switching fields (13) are each provided with or linked to a range indication for possible time values,
• for the speed-determining machine component (9), the switching field or switching fields (13) is/are visually highlighted such that for a time reduction of the machine component sequence, the time value must preferably be shortened;
• the switching fields are each provided with or linked to different optimization strategies, which, for example, propose a maximum time reduction, a mean time reduction or a minimum time reduction as alternatives and enable the automatic recalculation of the program after selection of an optimization strategy even without exact user input of values.

15. Method (100) according to any of Claims 9 to 14,
**characterized**
**in that** the control program (5) provides a separate visualization page (15) on the visualization device (6) for each visualized station (2), wherein suitable buttons (16) for switching between individual station visualization pages (15) are provided.

16. Method (100) according to any of Claims 9 to 15,
**characterized**
**in that** the recalculation of the production program and the visualization of the speed-determining station (8) and/or the speed-determining machine component (9) can be performed based on inputting new time values into the respective switching fields (13) without real operation of the production machine (1).

## Revendications

1. Machine de production (1) comprenant plusieurs stations (2) comprenant respectivement plusieurs composants de machine (3) et un élément de commande de machine (4) pour commander la machine de production (1) comprenant un programme de commande (5) doté d'un dispositif de visualisation (6), le programme de commande (5) étant configuré pour afficher sur le dispositif de visualisation (6) les stations (2) et/ou les composants de machine (3) d'une station sous la forme d'un organigramme séquentiel (7) et en l'occurrence pour mettre en valeur la station (8) définissant la vitesse et/ou le composant de machine (9) définissant la vitesse, **dans laquelle** :
(A5) le dispositif de visualisation (6) est conçu sous la forme d'une interface utilisateur interactive, une forme d'écran tactile étant préférée ;
(A8) le programme de commande (5) est en outre configuré pour afficher, après saisie d'une ou de plusieurs nouvelles valeurs de temps et reprise dans le programme de commande sur le dispositif de visualisation (6), un nouvel organigramme séquentiel (7) sur cette base ; et
(A2 (i, ii)) la mise en valeur de la station (8) définissant la vitesse et/ou du composant de machine (9) définissant la vitesse se produit au travers d'une ou des deux formes de visualisation suivantes :
(i) une ligne (10) s'étendant perpendiculairement à l'axe t de l'organigramme séquentiel et effleurant à la valeur t la barre de la station définissant la vitesse ou du composant de machine correspondant avec la barre de processus de cette station ou de ce composant de machine se terminant dans l'organigramme séquentiel ;
(ii) une mise en valeur visuelle des liaisons déjà présentes sur l'organigramme séquentiel, par exemple un pointeur (11) qui relie la fin d'une première étape de processus définissant la vitesse avec le début d'une deuxième étape de processus et définit un déclenchement.

2. Machine de production (1) selon la revendication 1,
**caractérisée en ce que :**
la mise en valeur de la station (8) définissant la vitesse et/ou du composant de machine (9) définissant la vitesse se produit au travers d'une ou de plusieurs des formes de visualisation suivantes :
(iii) une indication numérique du temps de retard ;
(iv) une reproduction du nom de la station définissant la vitesse ou du composant de machine définissant la vitesse dans une couleur d'avertissement telle que jaune, orange ou rouge ;
(v) la liaison de la station (8) définissant la vitesse ou de l'étape (9) définissant la vitesse avec un symbole graphique, par exemple un cadrant avec des aiguilles.

3. Machine de production (1) selon la revendication 1 ou 2,
**caractérisée en ce que :**
le programme de commande (5) est en outre configuré pour indiquer sur le dispositif de visualisation (6) les phases de temps (12) des séquences de processus réalisées par le composant de machine (3), de façon préférée au travers d'un agencement en lignes des composants de machine avec l'axe de temps prenant la forme d'un axe horizontal et une représentation des phases de temps (12) prenant la forme de sections pouvant être distinguées visuellement dans une frise chronologique sur la ligne du composant de machine respectif.

4. Machine de production (1) selon la revendication 3,
**caractérisée en ce que :**
les phases de temps (12) sont associées à un type de phase de temps défini de préférence sélectionné dans le groupe comportant le temps de réaction, le temps de retard, le temps de parcours et le temps d'avance.

5. Machine de production (1) selon l'une quelconque des revendications précédentes,
**caractérisée en ce que :**
le programme de commande (5) est en outre configuré pour mettre à disposition sur le dispositif de visualisation (6) une aide d'utilisateur pouvant être ouverte de façon préférée en cliquant sur la partie mise en valeur visuellement de la station (8) ou du composant de machine (9) définissant la vitesse et l'aide d'utilisateur contenant de façon particulièrement préférée des conseils sur l'optimisation du temps du processus.

6. Machine de production (1) selon l'une quelconque des revendications précédentes, **caractérisée en ce que :**
le programme de commande (5) est en outre configuré pour afficher sur le dispositif de visualisation (6) les champs de commande (13) en vue de saisir des valeurs de temps pour les phases de temps des séquences de processus réalisées par le composant de machine, une ou plusieurs des formes de visualisation suivantes étant prévues de façon préférée :
• les champs de commande sont représentés dans une fenêtre séparée ;
• les champs de commande d'un composant de machine sont disposés dans la ligne correspondante du composant de machine ;
• la succession de champs de commande à l'intérieur d'une ligne correspond à la succession des phases de temps commandables du composant de machine ;
• les champs de commande sont groupés par colonne en fonction du type de phase de temps ;
• les champs de commande sont représentés avec les mêmes couleurs que les types de phase de temps de l'organigramme séquentiel ;
• les champs de commande sont respectivement pourvus ou associés à une indication sur l'unité de temps respectivement utilisée, par exemple les secondes, minutes ou heures ;
• les champs de commande sont respectivement pourvus ou associés à une valeur de temps proposée par le programme de commande ;
• les champs de commande sont pourvus ou associés à une valeur limite pour la plus petite valeur de temps possible ;
• les champs de commande sont respectivement pourvus ou associés à une indication de plage pour les valeurs de temps possibles ;
• pour le composant de machine définissant la vitesse, le champ de commande ou les champs de commande est/sont mis en valeur visuellement lorsque le temps de la séquence de composant de machine doit de préférence être raccourci dans la valeur de temps ;
• les champs de commande sont respectivement pourvus ou associés à une stratégie d'optimisation différente proposant par exemple un raccourcissement de temps maximal, un raccourcissement de temps médian ou un raccourcissement de temps réduit en alternatives et permettant le recalcul automatique du programme après sélection d'une stratégie d'optimisation, et ce même sans saisie d'une valeur exacte par l'utilisateur.

7. Machine de production (1) selon l'une quelconque des revendications précédentes,
**caractérisée en ce que :**
le programme de commande (5) met à disposition pour chaque station (2) visualisée un côté de visualisation (15) séparé sur le dispositif de visualisation (6), des surfaces de commutation (16) adaptées étant mises à disposition pour passer d'un côté de visualisation (15) individuel de station à l'autre.

8. Machine de production (1) selon l'une quelconque des revendications précédentes,
**caractérisée en ce que :**
le programme de commande (5) est configuré de telle sorte que le recalcul du programme de production et la visualisation de la station (8) définissant la vitesse et/ou du composant de machine (9) définissant la vitesse peuvent être réalisés sur la base de la saisie de nouvelles valeurs de temps dans les champs de commande (13) respectifs hors fonctionnement réel de la machine de production (1).

9. **Procédé (100)** d'optimisation du temps de processus d'une machine de production (1) comprenant plusieurs stations (2) comprenant les respectivement multiples composants de machine (3) et un élément de commande de machine (4) pour commander la machine de production (1) comprenant un programme de commande (5) avec une interface utilisateur interactive réalisée sous la forme d'un dispositif de visualisation (6), de préférence un écran tactile, comprenant les étapes suivantes :
(A) visualisation (110) d'au moins une, de préférence de toutes, les stations (2) et/ou composants de machine (3) sous la forme d'un organigramme séquentiel (7) avec mise en valeur de la station (8) définissant la vitesse et/ou du composant de machine (9) définissant la vitesse avec indication des phases de temps (12) et mise à disposition des champs de commande (13) correspondants afin de saisir les valeurs de temps en relation avec la station (2) et/ou le composant de machine (3) respectivement visualisés dans le programme de commande (5) ;
(B) saisie d'une ou de plusieurs valeurs de temps dans les champs de commande (13) et déclenchement du transfert par l'utilisateur dans le programme de commande (5) ;
(C) calcul (120) de la séquence temporelle du programme de production sur la base de la ou des valeurs de temps saisies à l'étape (B) au travers des champs de commande (13) ;
(D) en option, répétition de la visualisation de l'étape (A) sur la base du programme de production recalculé à l'étape (C), de façon préférée par itération jusqu'à atteinte d'un temps de processus raccourci au maximum ;
**dans lequel :**
(A17) le programme de commande (5) est en outre configuré pour indiquer, après la saisie d'une ou de plusieurs nouvelles valeurs de temps et reprise dans le programme de commande (5) sur le dispositif de visualisation (6), un nouvel organigramme séquentiel (7) basé sur celles-ci ; et
(A12 (i, ii)) la mise en valeur de la station (8) définissant la vitesse et/ou du composant de machine (9) définissant la vitesse se produit au travers d'une ou des deux formes de visualisation suivantes :
(i) une ligne (10) s'étendant perpendiculairement à l'axe t de l'organigramme séquentiel et effleurant à la valeur t la barre de la station définissant la vitesse ou du composant de machine correspondant avec la barre de processus de cette station ou de ce composant de machine se terminant dans l'organigramme séquentiel ;
(ii) une mise en valeur visuelle des liaisons déjà présentes sur l'organigramme séquentiel, par exemple un pointeur (11) qui relie la fin d'une première étape de processus définissant la vitesse avec le début d'une deuxième étape de processus et définit un déclenchement.

10. Procédé (100) selon la revendication 9,
**caractérisé en ce que :**
la mise en valeur de la station (8) définissant la vitesse et/ou du composant de machine (9) définissant la vitesse se produit au travers d'une ou de plusieurs des formes de visualisation suivantes :
(iii) une indication numérique du temps de retard ;
(iv) une reproduction du nom de la station définissant la vitesse ou du composant de machine définissant la vitesse dans une couleur d'avertissement telle que jaune, orange ou rouge ;
(v) la liaison de la station (8) définissant la vitesse ou du composant de machine (9) définissant la vitesse avec un symbole graphique, par exemple un cadrant avec des aiguilles.

11. Procédé (100) selon la revendication 9 ou 10,
**caractérisé en ce que :**
le programme de commande (5) est en outre configuré pour indiquer sur le dispositif de visualisation (6) les phases de temps (12) des séquences de processus réalisées par le composant de machine (3), de façon préférée au travers d'un agencement en lignes des composants de machine (3) avec l'axe de temps prenant la forme d'un axe horizontal et une représentation des phases de temps (12) prenant la forme de sections pouvant être distinguées visuellement dans une frise chronologique sur la ligne du composant de machine (3) respectif.

12. Procédé (100) selon la revendication 9,
**caractérisé en ce que :**
les phases de temps (12) sont associées à un type de phase de temps défini de préférence sélectionné dans le groupe comportant le temps de réaction, le temps de retard, le temps de parcours et le temps d'avance.

13. Procédé (100) selon l'une quelconque des revendications 9 à 12,
**caractérisé en ce que :**
le programme de commande (5) est en outre configuré pour mettre à disposition sur le dispositif de visualisation (6) une aide d'utilisateur (14) pouvant être ouverte de façon préférée en cliquant sur la partie mise en valeur visuellement de la station (8) ou du composant de machine définissant la vitesse et l'aide d'utilisateur contenant de façon particulièrement préférée des conseils sur l'optimisation du temps du processus.

14. Procédé (100) selon l'une quelconque des revendications 9 à 13,
**caractérisé en ce que :**
le programme de commande (5) est en outre configuré pour afficher sur le dispositif de visualisation (6) les champs de commande (13) en vue de saisir des valeurs de temps pour les phases de temps (12) des séquences de processus réalisées par le composant de machine (3), une ou plusieurs des formes de visualisation suivantes étant prévues de façon préférée :
• les champs de commande (13) sont représentés dans une fenêtre séparée ;
• les champs de commande (13) d'un composant de machine sont disposés dans la ligne correspondante du composant de machine ;
• la succession de champs de commande (13) à l'intérieur d'une ligne correspond à la succession des phases de temps commandables du composant de machine ;
• les champs de commande (13) sont groupés par colonne en fonction du type de phase de temps ;
• les champs de commande (13) sont représentés avec les mêmes couleurs que les types de phase de temps de l'organigramme séquentiel ;
• les champs de commande (13) sont respectivement pourvus ou associés à une indication sur l'unité de temps respectivement utilisée, par exemple les secondes, minutes ou heures ;
• les champs de commande (13) sont respectivement pourvus ou associés à une valeur de temps proposée par le programme de commande ;
• les champs de commande (13) sont pourvus ou associés à une valeur limite pour la plus petite valeur de temps possible ;
• les champs de commande (13) sont respectivement pourvus ou associés à une indication de plage pour les valeurs de temps possibles ;
• pour le composant de machine (9) définissant la vitesse, le champ de commande ou les champs de commande (13) est/sont mis en valeur visuellement lorsque le temps de la séquence de composant de machine doit de préférence être raccourci dans la valeur de temps ;
• les champs de commande sont respectivement pourvus ou associés à une stratégie d'optimisation différente proposant par exemple un raccourcissement de temps maximal, un raccourcissement de temps médian ou un raccourcissement de temps réduit en alternatives et permettant le recalcul automatique du programme après sélection d'une stratégie d'optimisation, et ce même sans saisie d'une valeur exacte par l'utilisateur.

15. Procédé (100) selon l'une quelconque des revendications 9 à 14,
**caractérisé en ce que :**
le programme de commande (5) met à disposition pour chaque station (2) visualisée un côté de visualisation (15) séparé sur le dispositif de visualisation (6), des surfaces de commutation (16) adaptées étant mises à disposition pour passer d'un côté de visualisation (15) individuel de station à l'autre.

16. Procédé (100) selon l'une quelconque des revendications 9 à 15,
**caractérisé en ce que :**
le recalcul du programme de production et la visualisation de la station (8) définissant la vitesse et/ou du composant de machine (9) définissant la vitesse peuvent être réalisés sur la base de la saisie de nouvelles valeurs de temps dans les champs de commande (13) respectifs hors fonctionnement réel de la machine de production (1).
